# EUROPEAN PATENT SPECIFICATION

(11) **EP 0 765 266 B1**
(45) Date of publication and mention of the grant of the patent: **01.09.1999**
(21) Application number: 95924920.2
(22) Date of filing: 23.06.1995
(51) Int. Cl.: B63B 1/10

(54) **SURFACE-PIERCING SURFACE EFFECT MARINE CRAFT**
SEESPIEGELDURCHTRETENDES STAUFLÜGEL-WASSERFAHRZEUG
BATEAU A EFFET PLANANT A PLAN PORTEUR SEMI-IMMERGE

(30) Priority: 24.06.1994 IT MI941326
(43) Date of publication of application: 02.04.1997
(73) Proprietor: ROCCOTELLI, Sabino, 00141 Roma (IT)
(72) Inventor: ROCCOTELLI, Sabino, 00141 Roma (IT)
(74) Representative: Petruzziello, Aldo
(86) International application number: EP9502448
(87) International publication number: WO9600164

(56) References cited:
- WO-A-93/21060
- DE-B- 1 039 868

## Description

The object of the present invention is a marine or naval craft provided with a triple trimaran-type hull.

At present naval crafts of the type called trimaran are known, consisting of a set of three hulls placed one in the middle and the other two on each side with their longitudinal axes parallel to each other, that make it possible to obtain very slender hull shapes with moderate total drag values at high speed, through the reduction in residuary resistance as a result of the reduction in Froude number, with respect to a hull of the same displacement; the transverse stability which becomes unacceptable for ships with very narrow shapes, in this case is assured by the two lateral hulls which, being a long way from the longitudinal symmetry plane, provide substantial stabilizing moments. Since trimarans are displacing or semidisplacing craft, however, the reduction in total drag is relative because the reduction in residuary resistance is accompanied by an increase in viscous drag due to the fact that by dividing the total displacement over more than one hull there is an increase in the wetted surface.

Land and naval vehicles are also known of the type called WIG (Wing in Ground Effect Vehicles), which, by means of appropriately distributed and proportioned lifting contours, allow the weight ofthe vehicle to be totally supported by aerodynamic effect, freeing itself completely from the ground, allowing the drag to be reduced compared with a naval or land vehicle of the same weight and speed because, in the case of the naval craft, aerodynamic drag, due to an air density of 1.29 kg/m3, replaces hydrodynamic drag, due to a water density of 1.026 kg/m3 (sea water) and, on the whole, of a much higher value. Craft whose lift depends solely on the above mentioned wing contours however, having no physical contact with the water surface, present the well-known, hitherto unresolved problems that have prevented their practical exploitation. Of these drawbacks, the main ones are the poor response speed of the controls in the air which make it extremely dangerous to fly at a short distance from the water surface, as required to exploit the ground effect adequately (normally a distance of 5% less than the wing span), the poor lateral stability, the low propulsive efficiency due to the relatively low speed, even if very large, heavy and noisy propellers are used.

The aim of the present invention is to create a craft of new conception consisting of elements characteristic of the two vehicles described above but organized so as to eliminate their limits, drawbacks and defects whilst exploiting their food qualities.

WO 93/21060 discloses a twin hull watercraft comprising a load platform having a wing contour and two submarine hulls which remain immersed in the water also at the service speed and contribute to the craft's lift.

EP-A-0 495 722 refers to a displacement marine craft provided with stabilizing fins which produce a hydrodynamic lift which is negligible with respect to the displacement.

The essential characteristics of the naval craft claimed are stated in the attached claim 1.

The marine or naval craft of the invention has three hulls, a central main one and two lateral auxiliary ones that support a load platform shaped as an airfoil which, at speed, generates sufficient lift to almost completely support the craft; beneath the three aforementioned hulls project three ventral fins which, when the craft reaches the speed at which it almost supports itself and thus its hulls are no longer in contact with the water, remain partially immersed and pierce the free surface, maintaining contact between the craft and the see, in order to perform some functions that are typical of the craft and will be more fully illustrated below.

If one wished to describe the invention very briefly, one could say the craft of the invention is a hybrid resulting from the blending of a trimaran (three-hulled boat) and a WIG vehicle (Wing in Ground effect vehicle).

The new craft of the invention overcomes the disadvantages of the above mentioned craft belonging to prior art, has a low hydrodynamic drag having reduced the hull volumes and wetted surfaces to the minimum, has a much smaller total drag than a naval craft of the same weight because for its support it essentially exploits aerodynamic lift which is associated with relatively low drag especially at high speeds. The presence of the immersed appendages allows the use of a high frequency control system with hydrofoils and, therefore, with the very short response times typical of control surfaces in the water and the use of a typically naval propulsion system with propellers, jet drives or other high-efficiency systems.

Another characteristic ofthe new craft that makes it completely innovative with respect to the present displacing, planing or semi-planing naval craft, resides in the fact that while in the latter the efficiency and, that is, the ratio between the weight transported and the drag tends towards zero with increasing speed, in craft of the present invention efficiency is practically constant because it depends upon the CL/CD ratio between the lift and drag coefficients, which is practically constant for a certain angle of attack of the contour.

Other aims, characteristics and advantages of the craft will be apparent from the description given below, relating to embodiments chosen merely for the sake of nonlimiting example, illustrated in the attached drawings, in which:
- Figure 1 is a frontal view of the marine or naval craft of the invention, according to a preferred embodiment;
- Figure 2 is a side view ofthe same embodiment shown in the previous figure, with some portions omitted for the sake of clarity;
- Figure 3 is a plan view of the same embodiment shown in Figures 1 and 2 above, with some portions omitted for the sake of clarity.

With particular reference to such figures, L1 and L2 indicate the waterline when not moving or at low speed and the waterline at service speed, respectively. At the static waterline L1 the weight of the naval craft is balanced by the displacement of the hulls of the trimaran, two lateral ones indicted by 3 and one main central one indicated by 4.

The three above mentioned hulls support a load platform 5 that can be used, like the hulls themselves, for transport ofpassengers or any other paying load. The set of structures 3, 4 and 5 just described, consisting of three displacing hulls supporting a load platform, substantially forms a typical known marine craft called a trimaran, whose operating limits have previously been described.

From the bottom ofthe hulls 3, 4, respectively, protrude a pair of lateral ventral fins 6 and a central ventral fin 7, with respective fusiform bodies 8 and 9 beneath.

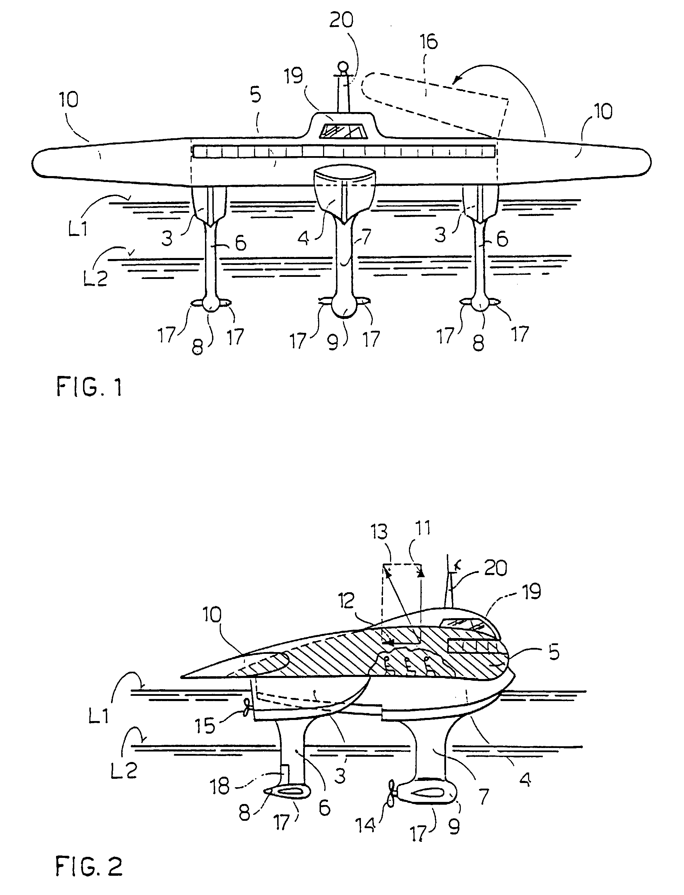

According to the present invention, the load platform 5 has a vertical longitudinal section shaped as a wing contour, as indicated schematically in the hatched area of Figure 2. The above platform extends laterally, in the preferred embodiment, with two appendages 10, also having a section shaped as a wing contour. When the craft travels at an indefinite speed, the set of structures 5 and 10 provides a lift 11 and a drag 12 with a resultant 13. The value of the lift 11, with an appropriate proportioning of the lifting surface combined with the choice of the section of the contours, within a set speed range, allows most of the weight of the craft to be balanced. Therefore the displacement of the immersed parts 12, which at the waterline L2, corresponding to the service speed, is limited to that of the lateral 6 and central 7 ventral fins and the fusiform bodies 8 and 9 beneath them, can be reduced to a minimum, in compatibility with the performance of the functions entrusted to them, simultaneously reducing the immersed surface from which the value of the viscous component of the hydrodynamic drag derives. With this configuration, the residuary component of the hydrodynamic drag is also moderate because of the slenderness of the water plane represented by the horizontal section of the ventral fins at the waterline L2 corresponding to the service speed.

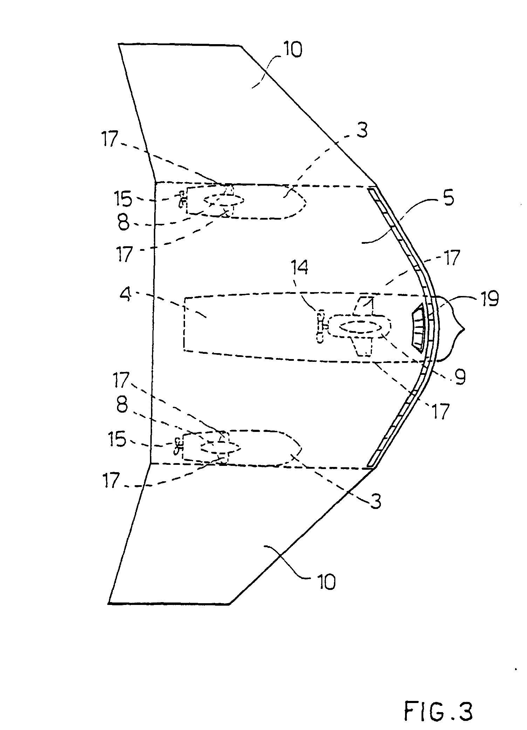

In the preferred embodiment shown in figures 1, 2 and 3, the power plant is housed in the central hull and , by means of appropriate gearing, drives a propeller 14 mounted astern of the fusiform body 9. In the case of jet drive propulsion, the sea inlets are provided on the fusiform body 9 itself whilst the feed pumps and ejectors can be installed downstream of the power plant, in the central hull 4.

Again according to a preferred embodiment, auxiliary power plants are installed in the lateral hulls 3, driving the propellers 15, and are used for mooring and casting off manoeuvres and for emergency propulsion with the craft at low speed, in trimaran attitude, i.e. with water line L1. In such attitude, when the craft is operating with displacement, at low speed, the extremities 10 can be folded upwards in the position 16 of Figure 1 or, in any case, arranged so as to reduce the transverse dimensions of the craft and facilitate coming alongside and mooring operations, for example. For the same purpose and especially if the craft will have to enter berths with shallow water, a system to make the ventral fins 6, 7 retractable or foldable can be adopted, in order to reduce immersion when the craft is in trimaran attitude.

According to the preferred embodiment being described, pairs of horizontal rudders 17 are mounted on the fusiform bodies 8 and 9 for control of the craft in longitudinal attitude, altitude and roll at the normal service speed and, that is, with the craft supported prevalently by the aerodynamic lift. Rudders 18 are provided on the after base of the lateral fins 6 to control the course in all service conditions.

In the figures the bridge is indicated by 19 and a mast to support the radar antenna and any other sensors by 20.

## Claims

1. A marine or naval craft comprising three trimaran type hulls, two lateral (3) and one central (4) supporting a load platform (5), characterized by the fact that respective ventral fins (6, 6, 7) project from the bottoms of said hulls (3, 3, 4) and by the fact that said load platform (5) has a vertical longitudinal section shaped like a wing contour suitable for producing **a substantially complete** aerodynamic lift at speed.

2. A naval craft according to claim 1, characterized by the fact that at the two sides of the load platform 5, respective appendages (10) are provided, these also having a wing contour.

3. A naval craft according to claim 2, characterized by the fact that said appendages (10) can be folded towards the central part of the craft, or, in any case, arranged so as to reduce the transverse dimensions.

4. A naval craft according to any one of the previous claims, characterized by the fact that at the base of said ventral fins (6, 6, 7) are placed respective fusiform or other shaped bodies (8, 8, 9) that support main propulsion (14) and control members (17, 18):

5. A naval craft according to claim 4, characterized by the fact that said control members (17) are horizontal rudders to control the attitude, altitude and roll, with the craft in prevalently aerodynamic lift, and that said control members (18) are vertical rudders for control ofthe course with the vehicle in all attitudes.

6. A naval craft according to any one of the previous claims, in which said ventral fins (6, 6, 7) beneath the keel of the hulls (3, 3, 4) are retractable or in any case can be positioned so as to reduce immersion with the craft displacing.

7. A naval craft according to any one of the previous claims in which propulsion is achieved by means of turbines or other types of prime movers operating marine propellers, jet drives or any other propulsion system.

8. A naval craft according to any one of the previous claims, in which an auxiliary power plant is situated in the lateral hulls (3, 3) for manoeuvring or for emergency propulsion.

9. A naval craft according to any one of the previous claims in which, at service speed, lift is assured primarily by the aerodynamic lift and the immersed parts are reduced to the bare minimum to achieve a marine type propulsion and obtain control of the attitude with hydrofoils.

## Patentansprüche

1. Ein Seefahrzeug oder nautisches Fahrzeug mit drei Rumpfen Art Trimaran, zwei seitlichen (3) und einem mittleren (4), die eine Ladeplattform (5) abstützen, dadurch gekennzeichnet, daß vom Flachkiel der besagten Rumpfe (3, 3, 4) entsprechende Unterflossen (6, 6, 7) hervorstehen. Die besagte Ladeplattform (5) hat einen vertikalen Längsschnitt mit verholtem Profil, um bei Geschwindigkeit einen kompletten aerodynamischen Auftrieb zu erhalten.

2. Ein Seefahrzeug gemäß Patentanspruch 1, daduch gekennzeichnet, daß an den beiden Seiten der Ladeplattform (5) zwei Schwanzstücke (10), ebenso mit verholtem Profil vorgesehen sind.

3. Ein Seefahrzeug gemäß Patenanspruch 2, daduch gekennzeichnet, daß die besagten Schwanzstücke (10) zum mittleren Teil hin zusammenklappbar sind oder auf jeden Fall so angeordnet werden können, um den queren Raumbedarf zu reduzieren.

4. Ein Seefahrzeug gemäß irgendeiner der vorherigen Patenansprüche, daduch gekennzeichnet, daß an der Grundfläche der besagten Unterflossen (6, 6, 7) entsprechende spindelförmige Körper oder anderer Formen (8, 8, 9 ) angeordnet sind, die die Hauptantriebselemente (14) und Kontrollelemente (17, 18) stützen.

5. Ein Seefahrzeug gemäß Patentanspruch 4, daduch gekennzeichnet, daß die besagten Kontrollelemente (17) Tiefenruder für die Kontrolle der Lage, der Quote und des Schlingerns, bei Fahrzeug in überwiegend aerodynamischen Schwebe, sind, und die besagten Kontrollelemente (18) Vertikalruder sind für die Kurskontrolle des Fahrzeuges in allen Trimmlagen.

6. Ein Seefahrzeug gemäß irgendeiner der vorherigen Patentansprüche in denen die besagten Unterflossen (6, 6, 7), unter dem Kiel der Rumpfe (3, 3, 4), einziehbar oder so positionierbar sind, um das Eintauchen durch verschiebbare Teile zu reduzieren.

7. Ein Seefahrzeug gemäß irgendeiner der vorherigen Patentansprüche, in denen der Antrieb über Turbinen oder anderen Motorentypen erzeugt wird, die Schiffsschrauben, Rückstoßantriebe oder andere eventuelle Antriebssysteme antreiben.

8. Ein Seefahrzeug gemäß irgendeiner der vorherigen Patentansprüche, in denen in den seitlichen Rumpfen (3, 3) eine Hilfsmotorenanlage für die Steuerung oder für den Notantrieb angeordnet ist.

9. Ein Seefahrzeug gemäß irgendeiner der vorherigen Patentansprüche, in denen bei Betriebsgeschwindigkeit, das Schweben überwiegend durch den aerodynamischen Auftrieb garantiert ist und die eingetauchten Teile auf ein Minimum reduziert sind, um einen Schiffsanntrieb zu erzeugen und eine Trimmungskontrolle bei Oberflächen mit hydrodynamischen Effekt zu erzielen.

## Revendications

1. Véhicule marin ou naval comprenant trois coques type trimaran, deux latérales (3) et une centrale (4), supportant une plate-forme de chargement (5), caractérisé par le fait que des nageoires ventrales (6, 6, 7) dépassent des carènes de chaque coque (3, 3, 4), et par le fait que la plate-forme de chargement (5) a une section longitudinale verticale à profil alaire permettant d'obtenir, en vitesse, une portance aérodynamique substantiellement complète.

2. Véhicule naval selon la revendication 1, caractérisé par le fait qu'aux deux côtés de la plate-forme de chargement (5) sont prévus des appendices relatifs (10) présentant eux aussi un profil alaire.

3. Véhicule naval selon la revendication 2, caractérisé par le fait que lesdites appendices (10) peuvent être repliés vers la partie centrale du véhicule ou peuvent en tout cas être positionnés de façon à réduire l'encombrement transversal.

4. Véhicule naval selon une revendication quelconque des revendications précédentes, caractérisé par le fait qu'à la base desdites nageoires ventrales (6, 6, 7) se trouvent des corps ayant la forme d'un fuseau ou une autre forme (8, 8, 9), qui supportent des organes de propulsion principaux (14) et de commande (17, 18).

5. Véhicule naval selon la revendication 4, caractérisé par le fait que les organes de commande (17) sont des gouvernails horizontaux pour la commande de l'assiette, de la cote et du roulis, avec le véhicule en sustentation essentiellement aérodynamique, et que lesdits organes de commande (18) sont des gouvernails verticaux pour le contrôle de la route avec n'importe quelle assiette du véhicule.

6. Véhicule naval selon une revendication quelconque des revendications précédentes, sur lequel les nageoires ventrales (6, 6, 7) sous la quille des coques (3, 3, 4) sont rétractiles ou peuvent en tout cas être positionnées de façon à réduire l'immersion avec le véhicule qui se déplace.

7. Véhicule naval selon une revendication quelconque des revendications précédentes, sur lequel la propulsion est réalisée par des turbines ou autres types de moteurs principaux actionnant des hélices marines, des jets d'eau ou d'éventuels autres systèmes de propulsion.

8. Véhicule naval selon une revendication quelconque des revendications précédentes, dans les coques latérales (3, 3) duquel est installé un appareil moteur auxiliaire pour la manoeuvre ou pour la propulsion de secours.

9. Véhicule naval selon une revendication quelconque des revendications précédentes, sur lequel, à la vitesse de service, la sustentation est assurée essentiellement par la portance aérodynamique et les parties immergées sont réduites au minimum indispensable pour réaliser une propulsion de type marin et pour obtenir un contrôle de l'assiette avec des surfaces à effet hydrodynamique.
